# FASCICULE DE BREVET EUROPEEN

(11) **EP 3 191 335 B1**
(45) Date de publication et mention de la délivrance du brevet: **09.09.2020**
(21) Numéro de dépôt: 15742026.6
(22) Date de dépôt: 24.07.2015
(51) Int. Cl.: B60K 11/08, H01H 9/18

(54) **DISPOSITIF D'ASSEMBLAGE D'UN GROUPE MOTO-VENTILATEUR MUNI D'AU MOINS UN VOLET MOBILE, ET GROUPE MOTO-VENTILATEUR ASSOCIÉ**
VORRICHTUNG ZUR MONTAGE EINER ELEKTRISCHEN LÜFTEREINHEIT MIT WENIGSTENS EINER BEWEGLICHEN KLAPPE UND ZUGEHÖRIGE ELEKTRISCHE LÜFTEREINHEIT
DEVICE FOR ASSEMBLING AN ELECTRIC FAN UNIT PROVIDED WITH AT LEAST ONE MOVABLE FLAP, AND ASSOCIATED ELECTRIC FAN UNIT

(30) Priorité: 08.09.2014 FR 1458386
(43) Date de publication de la demande: 19.07.2017
(73) Titulaire: Valeo Systemes Thermiques, 78320 Le Mesnil Saint Denis (FR)
(72) Inventeur: PEGUES, Hervé, F-92500 Rueil-Malmaison (FR); ZUBA, Vincent, F-78990 Elancourt (FR)
(74) Mandataire: Neuviale, Bertrand
(86) Numéro de dépôt international: PCT/EP2015/067082
(87) Numéro de publication internationale: WO 2016/037754

(56) Documents cités:
- EP-A1- 2 020 327
- WO-A1-2013/160832
- DE-U1-202004 010 030
- DE-U1-202013 002 812

## Description

L'invention concerne un dispositif d'assemblage d'un groupe moto-ventilateur, notamment pour véhicule automobile, ledit dispositif étant muni d'au moins un volet de passage d'air. L'invention se rapporte également à un groupe moto-ventilateur, ainsi qu'un module de refroidissement, munis d'un tel dispositif d'assemblage.

Dans le domaine des échangeurs de chaleurs des véhicules automobiles, notamment dans les modules de refroidissement comprenant un radiateur de refroidissement du moteur, il est connu d'utiliser des groupes moto-ventilateurs afin de faire circuler de l'air à travers le module. En effet, lorsque le véhicule ne se déplace pas à une vitesse suffisante pour que l'air refroidisse le radiateur, le groupe moto-ventilateur est mis en route pour prendre le relais et conserver un refroidissement suffisant du moteur.

Un groupe moto-ventilateur comprend, généralement, une hélice, un moteur pour la faire tourner, et un dispositif d'assemblage muni d'une armature servant à supporter l'ensemble. Ledit dispositif d'assemblage permet au groupe moto-ventilateur e prendre appui sur un support tel que le module de refroidissement ou le châssis du véhicule. Ladite armature définit un espace, agencé au niveau de l'hélice, pour permettre le passage d'air.

Pour augmenter la circulation d'air à travers ladite armature, celle-ci peut être pourvue d'orifices munis de volets mobiles. En position ouverte, les volets mobiles laissent passer l'air dans l'orifice, et en position fermée, ils bloquent son passage.

Les volets sont articulés sur l'armature grâce à des moyens de liaison, les moyens de liaison faisant charnière et étant agencés sur la partie supérieure du volet. Les moyens de liaison ont aussi pour fonction de maintenir les volets mobiles sur l'armature en position ouverte du volet, en particulier à grande vitesse. Par conséquent, les moyens de liaisons doivent être suffisamment robustes pour assurer le maintien des volets avec une pression d'air importante, ceci que les volets soient en position ouverte ou fermée. Il existe des moyens de liaison prévus pour répondre à cette exigence.

Lors du montage du dispositif d'assemblage, chaque volet est assemblé à l'armature par les moyens de liaison. Cependant, les moyens de liaison connus demandent un procédé d'assemblage complexe. Dans un premier exemple connu, il est nécessaire de déformer le volet pour pouvoir insérer des ergots dans des paliers, de chaque côté de la partie supérieure du volet. Dans un deuxième exemple connu, l'assemblage nécessite d'insérer un premier ergot dans un palier ou un anneau, puis d'encliqueter un autre ergot dans une gouttière prévue pour le maintenir, la gouttière étant munie d'une ouverture.

Or, une armature de groupe moto-ventilateur peut être pourvue de plus d'une dizaine d'ouvertures et donc de volets sur sa surface. Avec les solutions connues, le procédé d'assemblage est compliqué et ne peut être opéré rapidement, ni même automatisé sur des machines. La complexité des moyens de liaisons engendre en outre un coût élevé en raison des opérations de moulage à mettre en œuvre.

L'invention a donc pour objectif d'améliorer les produits connus et propose à cette fin un dispositif d'assemblage d'un groupe moto-ventilateur, notamment pour véhicule automobile, comprenant une armature de support dudit groupe, ladite armature comprenant au moins un orifice muni d'un volet mobile, le volet mobile étant configuré pour contrôler un passage d'air à travers l'orifice de l'armature entre une position fermée dans laquelle le volet bloque le passage d'air et une position ouverte dans laquelle le volet laisse passer l'air, le volet mobile étant assemblé à l'armature par un ou des moyens de liaison faisant charnière, ledit dispositif étant configuré pour que le volet mobile soit monté sur l'armature par une opération d'encliquetage dans le ou chacun desdits moyens de liaison.

Ainsi, lorsque le groupe moto-ventilateur est assemblé, il suffit d'encliqueter le ou les moyens de liaison pour assembler le ou les volets à l'armature. L'opération à effectuer est très simple, et ne demande pas de manipulation particulière. Grâce à l'invention, le montage du groupe moto-ventilateur est rapide et permet une baisse du coût de production. En outre, une automatisation du montage est possible avec ce dispositif. Même pour un nombre important de volets, le coût de production reste raisonnable.

Selon différents modes de réalisation de l'invention, les caractéristiques complémentaires suivantes pourront être prises ensemble ou séparément :
- le ou chacun des moyens de liaison comprend un axe et une gouttière, la gouttière étant configurée pour pivoter autour de l'axe,
- la gouttière s'étend au niveau du volet et l'axe s'étend au niveau d'un contour de l'orifice, pour un même moyen de liaison,
- le moyen ou les moyens de liaison sont disposés sensiblement au milieu d'un côté supérieur de l'orifice,
- la gouttière présente une ouverture permettant son encliquetage sur l'axe correspondant du moyen de liaison, ladite gouttière étant configurée pour que l'ouverture soit sensiblement transversale à un plan de l'armature lorsque le volet est en position ouverte,
- les moyens de liaison comprennent un plot s'étendant d'un contour de l'armature dans l'orifice, le plot supportant au moins un axe des moyens de liaison,
- le dispositif comprend deux moyens de liaison, les deux axes étant disposés de chaque côté du plot dans un plan de l'orifice, et les deux gouttières correspondantes étant espacées de la largeur du plot sur le volet,
- l'axe comprend une surface d'articulation du volet, ladite surface d'articulation présentant des aspérités,
- les aspérités sont des stries,
- l'orifice et le volet sont de forme rectangulaire,
- les moyens de liaison sont disposés le long de grands côtés du volet et de l'orifice,
- la gouttière est issue de matière du volet,
- le plot et/ou les axes sont issus de matière de l'armature,
- les volets sont à ouverture dynamique.

L'invention se rapporte aussi à un groupe moto-ventilateur comprenant une hélice, un moteur et un dispositif d'assemblage conforme à l'invention.

L'invention se rapporte encore à un module de refroidissement d'un véhicule comprenant au moins un échangeur de chaleur et un moto-ventilateur conforme à l'invention. Le ou les orifices du dispositif d'assemblage sont alors disposés en regard d'un faisceau d'échange de chaleur dudit échangeur.

D'autres caractéristiques et avantages de l'invention apparaîtront encore à la lecture de la description qui n'est donnée qu'à titre indicatif et qui n'a pas pour but de la limiter, et qui suit d'exemples de réalisation donnés à titre illustratif en référence aux figures annexées. Sur ces figures :
- la figure 1 est une vue en perspective illustrant une partie d'une armature d'un groupe moto-ventilateur conforme à l'invention,
- la figure 2 est une vue en perspective d'un orifice et d'un volet assemblé à l'armature par les moyens de liaison,
- la figure 3 est une vue en coupe de côté d'un volet, la coupe passant par un moyen de liaison,
- la figure 4 est une vue en perspective de deux volets assemblés à l'armature, la représentation étant coupée verticalement au niveau des moyens de liaison,
- la figure 5 est une vue de face d'un orifice de l'armature sans volet.

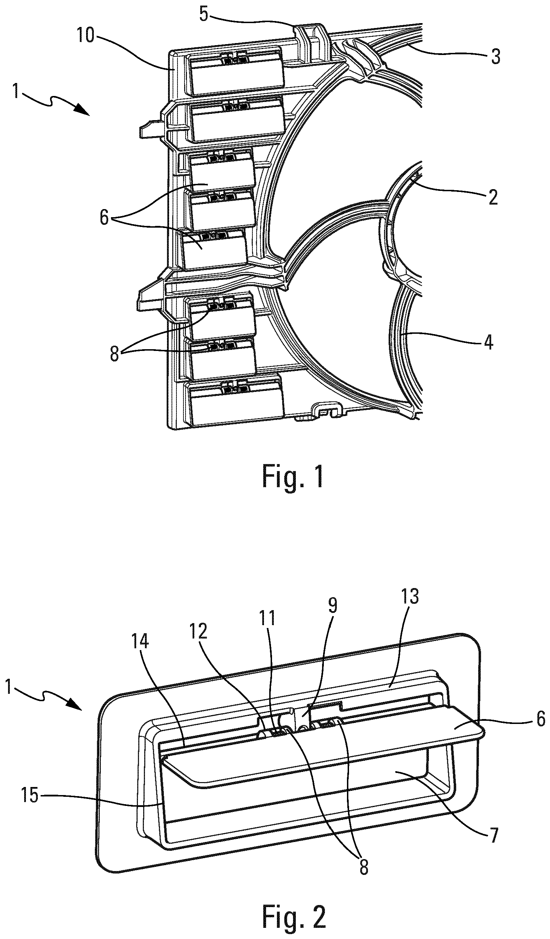

Comme illustré à la figure 1, l'invention concerne un dispositif d'assemblage 1 d'un groupe moto-ventilateur, notamment pour véhicule automobile. Le dispositif d'assemblage 1 comprend une armature 10 de support d'un moteur et d'une hélice non représentés, dudit groupe, ce dernier est avantageusement destiné à être associé à un module de refroidissement. Un module de refroidissement comprend généralement au moins un échangeur de chaleur, tel un radiateur de moteur et/ou un condenseur, d'un système de climatisation, pour refroidir un fluide par circulation d'air à travers le module. Le groupe moto-ventilateur a pour fonction d'activer une circulation d'un flux d'air dans l'échangeur de chaleur lorsque le véhicule est à l'arrêt ou se déplace à faible vitesse.

L'armature 10 a une virole interne 2, destinée à supporter l'hélice et le moteur, et une virole externe 3 configurée pour guider l'air, les deux viroles 2, 3 étant maintenues l'une à l'autre par des bras 4, telles des pales de stator. Entre les deux viroles 2, 3, un espace permet le passage de l'air activé par l'hélice. L'armature 10 présente une paroi étendue autour de la virole externe 3, et qui possède ici au moins une bride de fixation 5 pour l'assemblage de l'armature 10 et donc du groupe moto-ventilateur à l'un des échangeurs du module de refroidissement.

Afin d'augmenter le flux d'air dans le module de refroidissement, la paroi de l'armature 10 est munie d'orifices 7 rectangulaires pour faire traverser plus d'air à travers l'armature 10 lorsque le véhicule est en mouvement.

L'armature 10 est aussi munie de volets 6 mobiles devant les orifices 7, les volets 6 mobiles étant configurés pour contrôler le passage d'air à travers la paroi, entre une position fermée dans laquelle le volet 6 bloque le passage d'air et une position ouverte dans laquelle le volet 6 laisse passer l'air. Les volets 6 ont par exemple une forme rectangulaire correspondant à celle des orifices 7, et peuvent avoir des tailles différentes selon leur disposition sur l'armature. Les volets 6 sont avantageusement à ouverture dynamique, c'est-à-dire que l'ouverture de chacun des volets 6 est actionnée simplement par la pression d'air lorsque le véhicule se déplace à une vitesse suffisante. Ainsi, le volet 6 se soulève lorsque le véhicule est en mouvement et se rabaisse lorsque le véhicule se déplace lentement ou s'il est à l'arrêt.

Les volets 6 mobiles sont assemblés à l'armature 10 par un ou des moyens de liaison 8 faisant charnière. Les moyens de liaison 8 sont ici disposés le long d'un grand côté 13 de chaque volet 6 et orifice 7, le grand côté 13 étant celui du dessus de l' orifice 7 pour que le volet 6 se soulève et se rabaisse sans moyens d'actionnement mécanique.

Ledit dispositif 1 est configuré pour que les volets 6 mobiles soient montés sur l'armature 10 par une opération d'encliquetage dans le ou chacun desdits moyens de liaison 8. Autrement dit, l'invention emploie uniquement des moyens de liaison 8 par encliquetage pour l'articulation du ou des volets 6 sur l'armature 10. Les moyens de liaison 8 permettent ainsi d'assembler facilement et rapidement les volets 6, qui peuvent être nombreux sur une armature 10 de ce type de moto-ventilateur. Le positionnement du volet par rapport à l'armature ne demande pas de procédé complexe.

A cette fin, chaque moyen de liaison 8 comprend un axe 11 et une gouttière 12, la gouttière 12 étant configurée pour pivoter autour de l'axe 11, comme le montrent les figures 2, 3 et 4. La gouttière 12 présente une ouverture 16 permettant l'encliquetage de l'axe 11 correspondant du moyen de liaison 8 à l'intérieur de ladite gouttière 12. La gouttière 12 est rigide, mais elle peut se déformer pour faciliter son encliquetage autour de l'axe 11. En effet, l'ouverture 16 est plus étroite que le diamètre de l'axe 11 afin que la gouttière 12 entoure suffisamment l'axe 11 pour rester fermement assemblée à l'axe 11 lorsque celui-ci est encliqueté dans la gouttière 12. Néanmoins, la déformabilité du matériau constituant la gouttière 12 est limitée pour éviter un décrochement du volet 6.

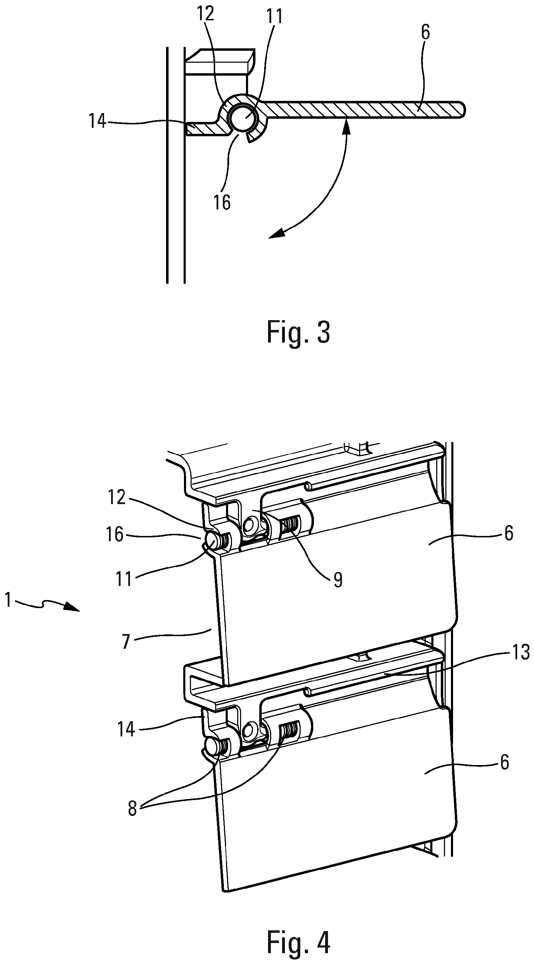

La gouttière 12 présente avantageusement son ouverture 16 de façon sensiblement transversale au plan de l'armature 12 lorsque le volet 6 est en position ouverte. De la sorte, cet agencement assure une liaison robuste du volet 6 à l'armature lorsque le flux d'air est important. En effet, comme le montre la figure 3 qui représente le volet 6 en position ouverte, lorsque le flux est assez fort pour le remonter, l'ouverture 16 est orientée vers le bas pour éviter qu'il ne se décroche.

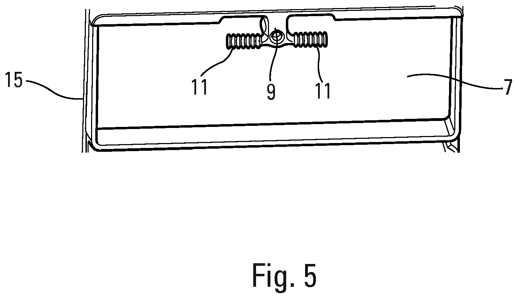

L'axe 11 a, de préférence, une surface d'articulation du volet qui présente des aspérités et plus précisément des stries, ladite surface d'articulation étant destinée à être en contact avec la gouttière 12, comme le montrent les figures 4 et 5. La surface d'articulation est formée de plusieurs disques d'un diamètre et d'une épaisseur prédéterminés avec un espacement régulier entre chaque disque de façon à former lesdites stries faisant le tour de l'axe 11. Ces stries favorisent un meilleur glissement de la gouttière 12 autour de l'axe 11, car les forces de frictions du contact sont diminuées par rapport à un axe dont la surface d'articulation est lisse. On obtient ici un minimum d'isostatisme entre la gouttière du volet et l'axe.,

Dans une première variante de réalisation, la gouttière 12 s'étend du côté supérieur 13 du volet 6 et l'axe 11 s'étend au niveau d'un contour 15 de l'orifice 7, comme cela est représenté sur les figures pour un même moyen de liaison 8. La gouttière 12 est ici issue de matière du volet 6 et/ou l'axe 11 est issu de matière de l'armature 10. Dans cette variante, la gouttière 12 tourne autour de l'axe 11, donc l'ouverture est sensiblement dans le plan de l'armature 10 lorsque le volet 6 est en position fermée qui est aussi la position d'encliquetage.

Dans une seconde variante de réalisation, non représentée sur les figures, c'est le volet qui est muni d'axes et les gouttières qui sont disposées sur le contour de l'orifice. En prévoyant un encliquetage du volet en position ouverte du volet, on peut alors avoir l'ouverture de la gouttière sensiblement transversale au plan de l'armature. Et elle le restera quelle que soit la position du volet 6. En effet, comme la gouttière est sur l'armature, elle ne tourne pas, car seul le volet tourne et l'axe qui y est rattaché par conséquent.

Dans ces deux variantes, en position ouverte du volet, on peut donc avoir la liaison robuste évoquée plus haut.

Le volet comprend aussi un épaulement 14 en partie supérieure, qui vient en butée sur une nervure du coté supérieur 13 lorsque le volet 6 est en position fermée. L'épaulement et la nervure empêchent une rotation supplémentaire du volet 6.

Le moyen ou les moyens de liaison 8 sont en outre ici disposés sensiblement au milieu du côté 13. Pour cela, les moyens de liaison 8 comprennent un plot 9 s'étendant d'un contour de l'armature 10 dans l'orifice 7. Le plot 9 est issu de matière de l'armature 10 et supporte au moins un axe 11 des moyens de liaison 8. Sur les figures 1, 2 et 4, le dispositif d'assemblage 1 comprend deux moyens de liaison 8, les deux axes 11 étant disposés de chaque côté du plot 9 dans le plan de l'orifice 7, et les deux gouttières 12 correspondantes étant espacées de la largeur du plot 9 sur le volet 6.

Le plot 9 des moyens de liaison 8 et son positionnement au milieu du côté 13 augmentent encore la facilité d'assemblage du volet 6 sur l'armature 10. En effet, les deux moyens de liaisons 8 sont alors assemblés plus aisément et de manière simultanée lors du montage du volet 6.

Pour la fabrication du groupe moto-ventilateur, il suffit de mouler d'un côté l'armature avec les orifices et une partie des moyens de liaison et, d'autre part, les volets avec l'autre partie des moyens de liaison. Le positionnement des volets et leur encliquetage sur l'armature peut en suite être effectué, soit par une machine, soit de façon manuelle. On monte ensuite l'ensemble formé du moteur de l'hélice.

## Revendications

1. Dispositif d'assemblage d'un groupe moto-ventilateur, notamment pour véhicule automobile, comprenant une armature (10) de support dudit groupe, ladite armature (10) comprenant au moins un orifice (7) muni d'un volet (6) mobile, le volet (6) mobile étant configuré pour contrôler un passage d'air à travers l'orifice (7) de l'armature (10) entre une position fermée dans laquelle le volet (6) bloque le passage d'air et une position ouverte dans laquelle le volet (6) laisse passer l'air, le volet (6) mobile étant assemblé à l'armature (10) par un ou des moyens de liaison (8) faisant charnière, ledit dispositif (1) étant configuré pour que le volet (6) mobile soit monté sur l'armature (10) par une opération d'encliquetage dans le ou chacun desdits moyens de liaison (8), **caractérisé en ce que** le moyen ou les moyens de liaison (8) sont disposés sensiblement au milieu d'un côté supérieur (13) de l'orifice (7).

2. Dispositif d'assemblage selon la revendication 1, dans laquelle le ou chacun des moyens de liaison (8) comprend un axe (11) et une gouttière (12), la gouttière (12) étant configurée pour pivoter autour de l'axe (11).

3. Dispositif d'assemblage selon la revendication 2, dans laquelle la gouttière (12) s'étend au niveau du volet (6) et l'axe (11) s'étend au niveau d'un contour (15) de l'orifice (7), pour un même moyen de liaison (8).

4. Dispositif d'assemblage selon l'une quelconque des revendications 2 ou 3, dans laquelle la gouttière (12) présente une ouverture (16) permettant son encliquetage sur l'axe (11) correspondant du moyen de liaison (8), ladite gouttière (12) étant configurée pour que l'ouverture (16) soit sensiblement transversale à un plan de l'armature (10) lorsque le volet (6) est en position ouverte.

5. Dispositif d'assemblage selon l'une quelconque des revendications 2 à 4, dans laquelle les moyens de liaison (8) comprennent un plot (9) s'étendant d'un contour de l'armature (10) dans l'orifice (7), le plot (9) supportant au moins un axe (11) des moyens de liaison (8),

6. Dispositif d'assemblage selon la revendication 5, comprenant deux moyens de liaison (8), les deux axes (11) étant disposés de chaque côté du plot (9) dans un plan de l'orifice (7), et les deux gouttières (12) correspondantes étant espacées de la largeur du plot (9) sur le volet (6).

7. Dispositif d'assemblage selon l'une quelconque des revendications précédentes, dans laquelle l'orifice (7) et le volet (6) sont de forme rectangulaire.

8. Groupe moto-ventilateur comprenant une hélice, un moteur et un dispositif d'assemblage (1) selon l'une quelconque des revendications précédentes.

9. Module de refroidissement d'un véhicule comprenant au moins un échangeur de chaleur et un groupe moto-ventilateur selon la revendication précédente.

## Patentansprüche

1. Vorrichtung zur Montage einer elektrischen Lüftereinheit, insbesondere für ein Kraftfahrzeug, die ein Traggestell (10) für die Einheit beinhaltet, wobei das Gestell (10) mindestens eine Öffnung (7) beinhaltet, die mit einer beweglichen Klappe (6) versehen ist, wobei die bewegliche Klappe (6) dazu konfiguriert ist, einen Luftdurchgang durch die Öffnung (7) des Gestells (10) zwischen einer geschlossenen Position, in der die Klappe (6) den Luftdurchgang sperrt, und einer offenen Position, in der die Klappe (6) die Luft durchgehen lässt, zu steuern, wobei die bewegliche Klappe (6) durch ein oder mehrere als Scharnier fungierende Verbindungsmittel (8) an dem Gestell (10) montiert ist, wobei die Vorrichtung (1) dazu konfiguriert ist, dass die bewegliche Klappe (6) durch einen Einklipsvorgang in das oder jedes der Verbindungsmittel (8) an dem Gestell (10) montiert wird, **dadurch gekennzeichnet, dass** das oder die Verbindungsmittel (8) im Wesentlichen in der Mitte einer oberen Seite (13) der Öffnung (7) angeordnet sind.

2. Montagevorrichtung nach Anspruch 1, wobei das oder jedes der Verbindungsmittel (8) eine Achse (11) und eine Rinne (12) beinhaltet, wobei die Rinne (12) dazu konfiguriert ist, um die Achse (11) zu schwenken.

3. Montagevorrichtung nach Anspruch 2, wobei, für ein gleiches Verbindungsmittel (8), die Rinne (12) sich im Bereich der Klappe (6) erstreckt und die Achse (11) sich im Bereich einer Kontur (15) der Öffnung (7) erstreckt.

4. Montagevorrichtung nach einem der Ansprüche 2 oder 3, wobei die Rinne (12) eine Öffnung (16) aufweist, die ihr Einklipsen auf die entsprechende Achse (11) des Verbindungsmittels (8) gestattet, wobei die Rinne (12) dazu konfiguriert ist, dass die Öffnung (16) zu einer Ebene des Gestells (10) im Wesentlichen quer verläuft, wenn sich die Klappe (6) in der offenen Position befindet.

5. Montagevorrichtung nach einem der Ansprüche 2 bis 4, wobei die Verbindungsmittel (8) eine Nase (9) beinhalten, die sich von einer Kontur des Gestells (10) in der Öffnung (7) erstreckt, wobei die Nase (9) mindestens eine Achse (11) der Verbindungsmittel (8) trägt.

6. Montagevorrichtung nach Anspruch 5, die zwei Verbindungsmittel (8) beinhaltet, wobei die zwei Achsen (11) auf jeder Seite der Nase (9) in einer Ebene der Öffnung (7) angeordnet sind und die zwei entsprechenden Rinnen (12) um die Breite der Nase (9) an der Klappe (6) beabstandet sind.

7. Montagevorrichtung nach einem der vorhergehenden Ansprüche, wobei die Öffnung (7) und die Klappe (6) eine rechteckige Form haben.

8. Elektrische Lüftereinheit, die ein Lüfterrad, einen Motor und eine Montagevorrichtung (1) nach einem der vorhergehenden Ansprüche beinhaltet.

9. Kühlmodul eines Fahrzeugs, das mindestens einen Wärmetauscher und eine elektrische Lüftereinheit nach dem vorhergehenden Anspruch beinhaltet.

## Claims

1. Device for assembling a motor fan unit, in particular for a motor vehicle, comprising a support housing (10) for the said unit, the said housing (10) comprising at least one opening (7) provided with a movable flap (6), the movable flap (6) being configured to control a passage of air through the opening (7) of the housing (10), between a closed position in which the flap (6) prevents the passage of air and an open position in which the flap (6) allows the air to pass, the movable flap (6) being mounted on the housing (10) by means of one or more connection means (8) that acts as a hinge, the said device (1) being configured such that the movable flap (6) is mounted on the housing (10) by an operation of snap-fitting into the or each one of the said connection means (8), **characterized in that** the connection means (8) is/are arranged essentially in the middle of an upper side (13) of the opening (7).

2. Assembly device according to Claim 1, wherein the or each one of the connection means (8) comprises a pin (11) and a gutter (12), the gutter (12) being configured to pivot about the pin (11).

3. Assembly device according to Claim 2, wherein the gutter (12) extends at the level of the flap (6) and the pin (11) extends at the level of a contour (15) of the opening (7), for a given connection means (8).

4. Assembly device according to either one of Claims 2 and 3, wherein the gutter (12) has an opening (16) allowing it to be snapped-fitted onto the corresponding pin (11) of the connection means (8), said gutter (12) being configured such that the opening (16) is essentially transverse with respect to a plane of the housing (10) when the flap (6) is in the open position.

5. Assembly device according to any one of Claims 2 to 4, wherein the connection means (8) comprise a lug (9) extending from a contour of the housing (10) into the opening (7), the lug (9) supporting at least one pin (11) of the connection means (8).

6. Assembly device according to Claim 5, comprising two connection means (8), the two pins (11) being arranged on either side of the lug (9) in a plane of the opening (7), and the two corresponding gutters (12) being spaced apart by the width of the lug (9) on the flap (6).

7. Assembly device according to any one of the preceding claims, wherein the opening (7) and the flap (6) are rectangular in shape.

8. Motor fan unit comprising a propeller, a motor and an assembly device (1) according to any one of the preceding claims.

9. Cooling module for a vehicle comprising at least one heat exchanger and one motor fan unit according to the preceding claim.
